# FASCICULE DE BREVET EUROPEEN

(11) **EP 4 291 764 B1**
(45) Date de publication et mention de la délivrance du brevet: **26.03.2025**
(21) Numéro de dépôt: 22701657.3
(22) Date de dépôt: 27.01.2022
(51) Int. Cl.: F02C 7/08, F23R 3/04

(54) **SYSTÈME DE COMBUSTION AVEC UNE CHAMBRE DE COMBUSTION TUBULAIRE ET UN ÉCHANGEUR DE CHALEUR ANNULAIRE**
VERBRENNUNGSSYSTEM MIT EINER ROHRBRENNKAMMER UND EINEM RINGFÖRMIGEN WÄRMETAUSCHER
COMBUSTION SYSTEM WITH A TUBULAR COMBUSTION CHAMBER AND AN ANNULAR HEAT EXCHANGER

(30) Priorité: 15.02.2021 FR 2101427
(43) Date de publication de la demande: 20.12.2023
(73) Titulaire: IFP Energies nouvelles, 92500 Rueil-Malmaison (FR)
(72) Inventeur: AMBRAZAS, Didier, 92852 RUEIL-MALMAISON CEDEX (FR); LECHARD, Christophe, 92852 RUEIL-MALMAISON CEDEX (FR); MICHEL, Jean-Baptiste, 92852 RUEIL-MALMAISON CEDEX (FR); THIRIOT, Julien, 92852 RUEIL-MALMAISON CEDEX (FR); VIOT, Pierre, 92852 RUEIL-MALMAISON CEDEX (FR)
(74) Mandataire: IFP Energies nouvelles
(86) Numéro de dépôt international: PCT/EP2022/051883
(87) Numéro de publication internationale: WO 2022/171451

(56) Documents cités:
- FR-A1- 3 049 044
- FR-A1- 3 084 447
- FR-A1- 3 084 450
- US-A1- 2002 175 522
- US-A1- 2013 098 063
- US-A1- 2016 054 003

## Description

### Domaine technique

La présente invention concerne le domaine des systèmes de combustion d'une turbine, notamment d'une turbine à cycle thermodynamique avec récupérateur, pour la production d'énergie, notamment d'énergie électrique.

Elle concerne plus particulièrement une microturbine avec récupérateur pour la production d'électricité à partir d'un combustible liquide ou gazeux.

Généralement, il est entendu par microturbine une turbine de petite puissance usuellement inférieure à 200 kW.

Les concepts de production d'électricité par microturbine sont particulièrement adaptés aux exigences de compacité qui se retrouvent dans les applications embarquées (« range extender » pouvant être traduit par prolongateur d'autonomie, groupes froids autonomes, chars et « shelters » militaires pouvant être traduits par refuges militaires, etc.). Par ailleurs, dans les applications stationnaires, les systèmes microturbines constituent des alternatives intéressantes aux traditionnels groupes électrogènes basés sur des moteurs à piston, en particulier parce que les besoins en maintenance peuvent être significativement réduits.

### Technique antérieure

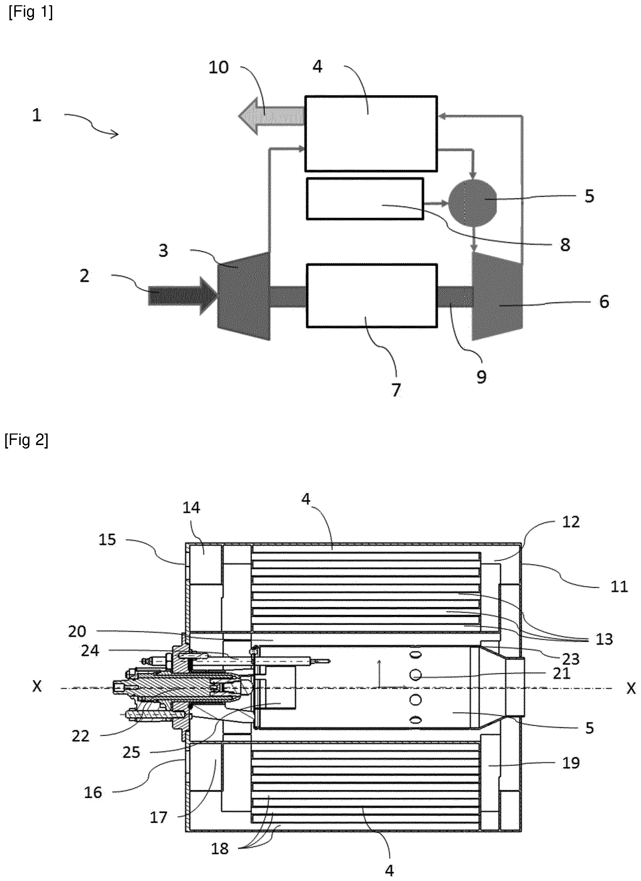

La figure 1 illustre schématiquement et de manière non limitative une microturbine 1 classique, fonctionnant à partir d'au moins un combustible, tel qu'un combustible liquide, par exemple de type gazole, ou un combustible gazeux, tel que du gaz naturel.

La turbine comprend au moins un étage de compression 3 avec au moins un compresseur de gaz, un échangeur de chaleur 4 (ou récupérateur), une chambre de combustion 5 (ou brûleur) alimentée en combustible par au moins un réservoir ou une conduite d'amenée de gaz 8, au moins un étage de détente 6 avec au moins une turbine de détente reliée par un arbre 9 au compresseur 3. Cette turbine comprend également un moyen de production d'énergie, ici électrique, qui comprend une génératrice électrique 7 placée avantageusement sur l'arbre 9 entre le compresseur 3 et la turbine 6.

Bien entendu, cette génératrice peut être alternativement reliée à la turbine de détente ou au compresseur par un arbre autre que celui reliant la turbine et le compresseur. Classiquement, l'échangeur de chaleur 4 peut être un échangeur à flux croisés, par exemple de type tubes-calandre ou à plaques alternées avec deux entrées et deux sorties.

Le compresseur 3 comprend une entrée 2 de gaz frais contenant de l'oxygène, généralement de l'air extérieur généralement à température ambiante, et une sortie d'air comprimé aboutissant à une entrée d'air comprimé de l'échangeur 4. La sortie d'air comprimé chaud de cet échangeur est reliée par une ligne à une admission d'air comprimé chaud du brûleur 5. La sortie de gaz surchauffés du brûleur est connectée par une ligne à l'entrée de la turbine 6 dont la sortie est reliée à une autre entrée de l'échangeur de chaleur 4 par une ligne de gaz surchauffés détendus. L'échangeur de chaleur 4 comprend également une sortie de gaz refroidis 10 pour être dirigés vers tous moyens d'évacuation et de traitement, comme une cheminée (non représentée).

Une telle constitution d'une microturbine, en particulier la conception de la chambre de combustion est décrite dans les demandes de brevet US 2016/054003, FR3041742 (WO2017/055074), FR3049044 (WO2017/157631), FR3084448, FR3084447 (WO2020/025233), FR3084450 (WO2020/025234).

L'utilisation d'un récupérateur - encore appelé échangeur de chaleur - est la meilleure solution pour atteindre un bon rendement énergétique du système microturbine. Son intégration pose toutefois des problématiques en termes d'encombrement. En fonction de la technologie de l'échangeur de chaleur, le volume du système peut ainsi augmenter d'un facteur dix. Qui plus est, en multipliant les composants (échangeur, chambre, turbine, etc.), on multiplie aussi les interfaces entre composants, qui représentent un risque pour la fiabilité (notamment pour la gestion des étanchéités à chaud et sous pression) et le rendement de l'ensemble.

En prenant l'exemple d'une microturbine classique d'une puissance électrique maximale d'environ 15 kW, la répartition volumique des principaux composants (hors capotage, isolation et conduits) est indiquée dans le tableau 1 ci-dessous :

**[Table 1]**

| **Composant** | **Volume approximatif occupé (en L)** |
|---|---|
| Chambre de combustion | 12 L |
| Echangeur | 88 L |
| Turbine / Compresseur / Machine électrique / Entrée d'air | 16 L |
| Electronique de puissance / Contrôle et refroidissement | 25 L |

Cette répartition volumique peut être généralisée aux applications embarquées (hors traction) dont les puissances sont généralement inférieures à 30 kW. Ce tableau met en évidence la contribution importante de l'échangeur récupérateur qui représente à lui seul presque deux tiers du volume total du système. Il parait alors important de trouver des architectures pertinentes améliorant la compacité de la microturbine.

Afin de proposer des solutions à ces problèmes de compacité et de limitation du nombre d'interfaces entre composants, la demande de brevet US2002175522A décrit une solution compacte, avec une chambre de combustion annulaire autour de l'échappement de la turbine et avec un récupérateur autour de l'arbre reliant la turbine et le compresseur. Cet emplacement de l'échangeur de chaleur ne permet pas une optimisation des échanges thermiques avec la chambre de combustion. De plus, la forme annulaire de la chambre de combustion nécessite une conception spécifique et un volume de celle-ci plus important.

Une autre solution est décrite dans la demande de brevet WO2016/040964A, qui concerne un système avec une turbine immédiatement à la sortie de la chambre de combustion et un échangeur de chaleur à co-courant autour de la turbine et de la chambre de combustion. En raison de l'échange de chaleur à co-courant, l'échange thermique n'est pas optimal, et ne permet pas d'obtenir des performances optimales de la microturbine.

### Résumé de l'invention

L'invention a pour but de permettre la construction d'une turbine, notamment d'une microturbine, compacte et avec des performances améliorées. Pour cela, l'invention concerne un système de combustion avec une chambre de combustion tubulaire et un échangeur de chaleur annulaire à contre-courant autour de la chambre de combustion. Ainsi, ce système de combustion permet de supprimer les isolants thermiques traditionnels autour de la chambre de combustion en les remplaçant par l'échangeur. On évite ainsi les pertes thermiques rencontrées sur les microturbines conventionnelles tout en exploitant au maximum le volume représenté par l'échangeur, optimisant ainsi la compacité de la microturbine.

L'invention concerne un système de combustion pour une turbine, notamment pour une turbine à cycle thermodynamique avec récupérateur, pour la production d'énergie, comprenant une chambre de combustion tubulaire à flux continu et un échangeur de chaleur entre les gaz d'admission pour ladite chambre de combustion et les gaz brûlés issus de ladite chambre de combustion. Ledit échangeur de chaleur est un échangeur de chaleur à contre-courant annulaire agencé autour de ladite chambre de combustion.

Selon un mode de réalisation, ledit échangeur de chaleur comprend une pluralité de canaux axiaux.

Conformément à une mise en œuvre, lesdits canaux axiaux sont concentriques.

Selon un aspect, ledit échangeur de chaleur comprend un canal central pour la circulation desdits gaz brûlés.

Selon une option de réalisation, au moins un desdits canaux intègre une microstructure.

Selon une caractéristique, ledit échangeur de chaleur comporte au moins deux collecteurs annulaires pour lesdits gaz d'admission et deux collecteurs annulaires pour lesdits gaz brûlés, de préférence ledit échangeur de chaleur comporte à chaque extrémité axiale un collecteur annulaire pour lesdits gaz d'admission et un collecteur annulaire pour lesdits gaz brûlés.

Avantageusement, chaque collecteur annulaire pour lesdits gaz brûlés comporte une unique ou une pluralité de connexions d'entrée et/ou de sortie desdits gaz brûlés régulièrement répartis sur la circonférence dudit collecteur annulaire, de préférence chaque collecteur annulaire pour lesdits gaz brûlés comporte entre deux et huit connexions d'entrée et/ou de sortie.

De manière avantageuse, le collecteur annulaire situé à la même extrémité axiale qu'un injecteur de carburant de ladite chambre de combustion pour lesdits gaz d'admission comporte une unique ou une pluralité de connexions d'entrée desdits gaz d'admission régulièrement répartis sur la circonférence dudit collecteur annulaire, de préférence entre deux et huit connexions d'entrée.

De préférence, le collecteur annulaire pour lesdits gaz d'admission situé à l'extrémité axiale opposée d'un injecteur de carburant pour ladite chambre de combustion est relié à ladite chambre de combustion.

Conformément à un mode de réalisation, ledit échangeur de chaleur est réalisé en acier inoxydable ou en superalliage.

Selon une mise en œuvre, ladite chambre de combustion comprend un tube à flamme avec un diffuseur perforé radialement pour le passage desdits gaz d'admission, et un injecteur de carburant axial.

En outre, l'invention concerne une turbine pour la production d'énergie comprenant au moins un étage de compression avec au moins un compresseur de gaz, un système de combustion selon l'une des caractéristiques précédentes, une alimentation en carburant, au moins un étage de détente avec au moins une turbine de détente reliée par un arbre à un compresseur de gaz, dans lequel ledit échangeur de chaleur dudit système de combustion assure un échange de chaleur entre lesdits gaz d'admission en sortie dudit au moins un étage de compression, et lesdits gaz brûlés en sortie dudit au moins un étage de détente.

D'autres caractéristiques et avantages du système selon l'invention, apparaîtront à la lecture de la description ci-après d'exemples non limitatifs de réalisations, en se référant aux figures annexées et décrites ci-après.

### Liste des figures

La figure 1, déjà décrite, illustre une turbine à cycle thermodynamique avec récupérateur selon l'art antérieur.
La figure 2 illustre une coupe axiale d'un système de combustion selon un mode de réalisation de l'invention.
La figure 3 illustre une coupe transversale d'un système de combustion selon un mode de réalisation de l'invention.
La figure 4 illustre une vue tridimensionnelle d'un système de combustion selon un mode de réalisation de l'invention.
La figure 5 illustre une vue tridimensionnelle d'un système de combustion selon une deuxième variante de réalisation de l'invention.
La figure 6 illustre une vue tridimensionnelle d'un système de combustion selon un mode de réalisation de l'invention.
La figure 7 illustre une vue tridimensionnelle d'un système de combustion selon une deuxième variante de réalisation de l'invention.
La figure 8 illustre une vue en coupe d'un système de combustion selon un mode de réalisation de l'invention.

### Description des modes de réalisation

La présente invention concerne un système de combustion pour une turbine, notamment une turbine à cycle thermodynamique avec récupérateur, en particulier une microturbine. Cette turbine permet la production d'énergie, notamment d'énergie électrique.

Le système de combustion selon l'invention comprend :
- une chambre de combustion tubulaire, et à flux continu, dans laquelle se déroule en continu la combustion de gaz d'admission au moyen d'un carburant,
- un échangeur de chaleur (appelé aussi récupérateur), qui permet un échange de chaleur entre les gaz d'admission pour la chambre de combustion, ces gaz d'admission peuvent être préalablement comprimés, et les gaz brûlés issus de la chambre de combustion, les gaz brûlés pouvant être préalablement détendus avant leur passage dans un échangeur de chaleur.

Selon l'invention, l'échangeur de chaleur est un échangeur de chaleur à contre-courant, en d'autres termes les gaz d'admission et les gaz brûlés circulent en direction opposée dans l'échangeur de chaleur. Ce type d'échangeur de chaleur permet un échange thermique optimal, ce qui permet de réduire les dimensions de l'échangeur de chaleur. Au sein de l'échangeur de chaleur, il n'y a pas de contact direct entre les gaz d'admission et les gaz brûlés, la circulation des gaz d'admission est séparée de la circulation des gaz brûlés par des parois.

De plus, l'échangeur de chaleur a une forme annulaire et est agencé autour de la chambre de combustion. Cet agencement autour de la chambre de combustion permet de supprimer les isolants thermiques traditionnels autour de la chambre de combustion et de les remplacer par l'échangeur de chaleur. On évite ainsi les pertes thermiques rencontrées sur la chambre de combustion tout en exploitant au maximum le volume représenté par l'échangeur, optimisant ainsi la compacité du système de combustion, et a fortiori de la turbine utilisant un tel système de combustion. L'axe de l'échangeur de chaleur annulaire est identique à l'axe de la chambre de combustion tubulaire.

De préférence, le système de combustion peut comporter des moyens pour faire circuler les gaz d'admission directement depuis l'échangeur de chaleur vers la chambre de combustion, sans sortir du système de combustion.

De manière avantageuse, le système de combustion peut comporter une sortie des gaz brûlés en sortie de la chambre de combustion, et une entrée des gaz brûlés au niveau de l'échangeur de chaleur.

De manière préférée, le système de combustion peut ne comporter aucun carter entre la chambre de combustion et l'échangeur de chaleur.

Selon un mode de réalisation de l'invention, l'échangeur de chaleur peut comprendre une pluralité de canaux axiaux selon la direction axiale de la chambre de combustion tubulaire et de l'échangeur de chaleur annulaire. Alternativement, l'échangeur de chaleur peut comprendre une pluralité de canaux circonférentiels, ou ayant d'autres orientations. Au sein des canaux circulent soit les gaz d'admission soit les gaz brûlés. Afin de faciliter les échanges de chaleurs, deux canaux consécutifs sont prévus pour la circulation de gaz différents. En d'autres termes, l'échangeur de chaleur est formé par une alternance de canaux pour les gaz d'admission et de canaux pour les gaz brûlés. Les canaux axiaux permettent un bon échange de chaleur.

Conformément à une mise en œuvre de l'invention, pour laquelle l'échangeur de chaleur comprend une pluralité de canaux axiaux, les canaux peuvent être concentriques. En d'autres termes, les canaux sont formés par un ensemble de tubes concentriques, les gaz d'admission et les gaz brûlés circulant entre deux tubes concentriques. Ce mode de réalisation permet une grande surface d'échange de chaleur, ce qui augmente les échanges thermiques, et permet de réduire les dimensions de l'échangeur de chaleur. Pour ce mode de réalisation l'échangeur de chaleur peut comprendre entre 10 et 1000 canaux concentriques, le nombre de canal pouvant être déterminé notamment en fonction de la puissance de la turbine. Ces gammes de valeur permettent un bon compromis entre les échanges de chaleur et les dimensions de l'échangeur de chaleur.

De préférence, le canal central (le plus proche de la chambre de combustion) peut être un canal dans lequel circulent les gaz brûlés. Ainsi, ces gaz d'admission peuvent être réchauffés avant leur entrée dans la chambre de combustion.

Selon une caractéristique, au moins un canal, de préférence, tous les canaux de l'échangeur de chaleur peuvent comprendre des microstructures intégrées (de l'anglais « latice »). En d'autres termes, au moins un canal peut comprendre des éléments, telle qu'une grille, un treillis, ou une mousse ou toute forme similaire pouvant être réalisées au moyen d'un procédé de fabrication additive. Les microstructures intégrées dans les canaux permettent d'augmenter la surface d'échange de chaleur, et par conséquent les échanges thermiques, et ainsi d'améliorer la compacité du système de combustion.

Selon un mode de réalisation de l'invention, l'échangeur de chaleur peut comprendre :
- au moins deux collecteurs annulaires pour les gaz d'admission : un premier collecteur pour la distribution des gaz d'admission (en d'autres termes à l'entrée), et un deuxième collecteur pour la collecte des gaz d'admission réchauffés (en d'autres termes à la sortie),
- au moins deux collecteurs annulaires pour les gaz brûlés : un premier collecteur pour la distribution des gaz brûlés (en d'autres termes à l'entrée), et un deuxième collecteur pour la collecte des gaz brûlés refroidis (en d'autres termes à la sortie).

De préférence, l'échangeur annulaire comprend à chaque extrémité axiale (selon l'axe de la chambre de combustion) un collecteur pour les gaz d'admission et un collecteur pour les gaz brûlés. Etant donné que l'échangeur de chaleur est à contre-courant, le collecteur d'entrée des gaz d'admission dans l'échangeur de chaleur est du même côté que le collecteur de sortie des gaz brûlés, et le collecteur d'entrée des gaz brûlés dans l'échangeur de chaleur est du même côté que le collecteur de sortie des gaz d'admission. Cette mise en œuvre permet de simplifier les entrées et sorties de l'échangeur de chaleur.

En variante, l'échangeur annulaire peut comprendre des collecteurs à chaque extrémité et au centre, par exemple des collecteurs d'entrée des gaz d'admission aux extrémités axiales, et un collecteur de sortie au centre de l'échangeur de chaleur, ainsi qu'un collecteur d'entrée des gaz brûlés au centre, et des collecteurs de sortie à chaque extrémité axiale de l'échangeur de chaleur.

Conformément à une mise en œuvre de ce mode de réalisation, chaque collecteur annulaire pour les gaz brûlés peut comporter une unique ou une pluralité, de préférence entre 2 et 8, et de manière très préférée entre 3 et 6, de connexions d'entrée et/ou de connexions de sortie. Cette pluralité de connexions d'entrée et de sortie sont régulièrement réparties sur la circonférence du collecteur annulaire. La répartition régulière sur la circonférence permet une répartition homogène des gaz brûlés dans l'échangeur de chaleur, et par conséquent une optimisation de l'échange de chaleur, permettant la réduction des dimensions de l'échangeur de chaleur. Cette répartition régulière est particulièrement adaptée pour le mode de réalisation pour lequel l'échangeur de chaleur comporte des canaux axiaux, en particulier des canaux axiaux concentriques. On appelle respectivement connexions d'entrée et connexions de sortie les entrées et les sorties de gaz brûlés de l'échangeur de chaleur.

Selon une option de réalisation de ce mode de réalisation, le collecteur annulaire pour gaz d'admission situé à la même extrémité d'un injecteur de carburant de la chambre de combustion peut comporter une unique ou une pluralité, de préférence entre 2 et 8, et de manière très préférée entre 3 et 6, connexions d'entrée. Cette pluralité de connexions d'entrée est régulièrement répartie sur la circonférence du collecteur annulaire. La répartition régulière sur la circonférence permet une répartition homogène des gaz d'admission dans l'échangeur de chaleur, et par conséquent une optimisation des échanges thermiques, permettant la compacité de l'échangeur de chaleur. Cette répartition régulière est particulièrement adaptée pour le mode de réalisation pour lequel l'échangeur de chaleur comporte des canaux axiaux, en particulier des canaux axiaux concentriques. On appelle connexions d'entrée, les entrées de gaz d'admission dans l'échangeur de chaleur.

Selon un aspect de ce mode de réalisation, le collecteur annulaire pour gaz d'échappement situé à l'extrémité opposée de l'injecteur de carburant de la chambre de combustion est relié directement à la chambre de combustion. Par exemple, ce collecteur d'échappement peut être relié à un volume annulaire de la chambre de combustion, qui sert à alimenter l'intérieur d'un tube à flamme au moyen d'orifices radiaux au sein du tube à flamme. Cette réalisation permet une intégration complète de l'échangeur de chaleur avec la chambre de combustion, ce qui permet de gagner en compacité.

Selon une option de réalisation de l'invention, les connexions d'entrée et/ou les connexions de sortie peuvent avoir une forme d'un secteur annulaire (portion d'anneau), de manière à simplifier leur réalisation. Alternativement, les connexions d'entrée et/ou les connexions de sortie peuvent avoir une forme rectangulaire, ou toute autre forme.

Selon un mode de réalisation, l'échangeur de chaleur peut être réalisé en acier inoxydable ou en un superalliage, tel que le superalliage Inconel ^{™} (Special Metals Corporation, USA) ou tout matériau analogue, afin de tenir compte des contraintes de tenue thermomécanique de l'échangeur de chaleur à haute température.

De plus, l'échangeur de chaleur peut être fabriqué par tout procédé de fabrication, notamment par empilement, soudage, moulage, par fabrication additive, etc.

Conformément à une mise en œuvre de l'invention, la chambre de combustion peut comprendre un tube à flamme à l'intérieur duquel se déroule la combustion, et un injecteur de carburant axial pour injecter le carburant axialement dans le tube à flamme. Le tube à flamme peut comprendre un diffuseur perforé radialement pour le passage des gaz d'admission depuis l'extérieur du tube à flamme vers l'intérieur du tube à flamme. L'injecteur de carburant est situé à une extrémité de la chambre de combustion. L'autre extrémité de la chambre de combustion permet l'échappement des gaz brûlés. Les perforations radiales du tube à flamme peuvent être situées sur au moins un diamètre du tube à flamme, par exemple sensiblement à la moitié du tube à flamme.

En outre, la chambre de combustion peut comprendre au moins un des équipements suivants :
- un stabilisateur de flamme,
- une bougie d'allumage,
- des moyens pour générer un mouvement aérodynamique des gaz d'admission dans la chambre de combustion,
- une asymétrie des perforations du diffuseur,
- un rétrécissement du diffuseur, etc.

Par exemple, la chambre de combustion peut être conforme à l'une des chambres de combustion décrites dans l'une des demandes de brevet suivantes : FR3041742 (WO2017/055074), FR3049044 (WO2017/157631), FR3084448, FR3084447 (WO2020/025233), FR3084450 (WO2020/025234).

En outre, l'invention concerne une turbine pour la production d'énergie, notamment d'énergie électrique, qui comprend :
- au moins un étage de compression avec au moins un compresseur, pour comprimer des gaz d'admission,
- un système de combustion selon l'une des variantes ou des combinaisons de variantes décrites précédemment, avec une chambre de combustion et un échangeur de chaleur,
- une alimentation en carburant pour alimenter la chambre de combustion en carburant, le carburant peut être un combustible liquide, par exemple de type gazole, ou un combustible gazeux, tel que du gaz naturel, ou tout autre combustible équivalent,
- au moins un étage de détente avec au moins une turbine de détente, pour détendre des gaz brûlés issus de la chambre de combustion, et pour produire de l'énergie, au moins une turbine de détente étant reliée par un arbre à au moins un compresseur.

L'échangeur de chaleur du système de combustion permet l'échange de chaleur entre les gaz d'admission en sortie d'au moins un étage de compression et les gaz brûlés en sortie d'au moins un étage de détente. Grâce au système de combustion, la turbine est plus compacte.

La turbine comporte également des conduites pour acheminer les gaz (gaz d'admission et gaz brûlés) : en particulier une conduite entre un étage de compression et l'échangeur de chaleur, une conduite entre la chambre de combustion et un étage de détente, une conduite entre l'étage de détente et l'échangeur de chaleur, et une conduite d'échappement des gaz brûlés en sortie de l'échangeur de chaleur.

La turbine peut être conforme à celle représentée en figure 1, à l'exception du récupérateur 4 (échangeur de chaleur) qui est placé autour de la chambre de combustion.

Selon un mode de réalisation, la turbine peut comprendre en outre une génératrice électrique pour récupérer l'énergie de la turbine. La génératrice électrique peut être placée sur l'arbre de compression qui relie une turbine et un compresseur. Dans une optique de compacité, la génératrice électrique peut être placée entre un compresseur et une turbine de détente. Alternativement, la génératrice électrique peut être agencée à un autre emplacement, ou sur un arbre de turbine de détente ou sur un arbre de compresseur.

Afin de commander la machine électrique, et pour récupérer l'énergie électrique, la génératrice électrique peut être commandée par un onduleur électrique, qui peut être connecté à un onduleur réseau qui est relié à un réseau de distribution électrique et/ou à des moyens de stockages d'énergie électrique, par exemple au moins une batterie électrique ou tout système analogue.

Selon un mode de réalisation, la turbine peut être embarquée dans un véhicule. Dans ce cas, la génération d'énergie sert au déplacement du véhicule.

Selon une caractéristique, la turbine peut comprendre une pluralité de turbines.

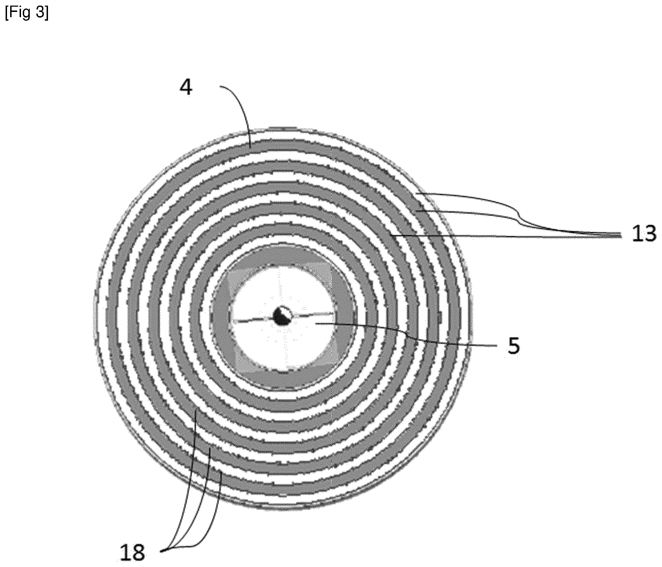

Les figures 2 et 3 illustrent, schématiquement et de manière non limitative, un système de combustion selon un mode de réalisation de l'invention. La figure 2 est une coupe axiale du système de combustion (selon l'axe X de la chambre de combustion et de l'échangeur de chaleur), et la figure 3 est une coupe transversale du système de combustion au niveau des canaux de l'échangeur de chaleur.

Le système de combustion comprend une chambre de combustion tubulaire 5 et un échangeur de chaleur 4. La chambre de combustion tubulaire 5 comprend un tube à flamme 23 pourvu d'orifices 21 pour le passage des gaz d'admission. De plus, la chambre de combustion tubulaire 5 comporte un injecteur de carburant 22, et optionnellement une bougie 24. Les gaz brûlés lors de la combustion ressortent de la chambre de combustion 5 du côté opposé à celui de l'injecteur de carburant 22. En outre, la chambre de combustion tubulaire 5 peut comporter optionnellement un accroche-flamme 25.

L'échangeur de chaleur annulaire 4 comporte une pluralité de canaux axiaux concentriques (13, 18). Dans les canaux axiaux 13 circulent les gaz brûlés, et dans les canaux axiaux 18 circulent les gaz d'admission. L'échangeur de chaleur 4 comporte une alternance selon la direction radiale des canaux axiaux 13 et des canaux axiaux 18. Sur la figure 2, les gaz d'admission circulent de gauche à droite dans l'échangeur de chaleur 4, et les gaz brûlés circulent de droite à gauche dans l'échangeur de chaleur 4, formant ainsi un échangeur de chaleur à contre-courant.

Pour les gaz d'admission, l'échangeur de chaleur 4 comporte :
- au moins une connexion d'entrée 16 (une seule est représentée, mais plusieurs sont réparties sur la circonférence de l'échangeur de chaleur 4),
- un collecteur annulaire de gaz d'admission 17, qui collecte les gaz d'admission provenant des connexions d'entrée 16 et distribuant les gaz d'admission dans les canaux 18,
- les canaux pour gaz d'admission 18,
- un collecteur annulaire de gaz d'admission 19, qui collecte les gaz d'admission réchauffés sortant des canaux pour gaz d'admission 18, le collecteur d'admission est relié à un volume 20 autour du tube à flamme 23 pour alimenter la chambre de combustion 5 par les gaz d'admission réchauffés.

Pour les gaz brûlés, l'échangeur de chaleur 4 comporte :
- une pluralité de connexions d'entrée 11 (une seule est représentée, mais plusieurs sont réparties sur la circonférence de l'échangeur de chaleur 4),
- un collecteur annulaire de gaz brûlés 12, qui collectent les gaz brûlés provenant des connexions d'entrée 11 et distribuant les gaz brûlés dans les canaux 13,
- les canaux pour gaz brûlés 13,
- un collecteur annulaire de gaz brûlés 14, qui collecte les gaz brûlés refroidis provenant des canaux 13,
- au moins une connexion de sortie 15 (une seule est représentée, mais plusieurs sont réparties sur la circonférence de l'échangeur de chaleur 4), qui permettent la sortie des gaz brûlés refroidis provenant du collecteur annulaire de gaz brûlés 14.

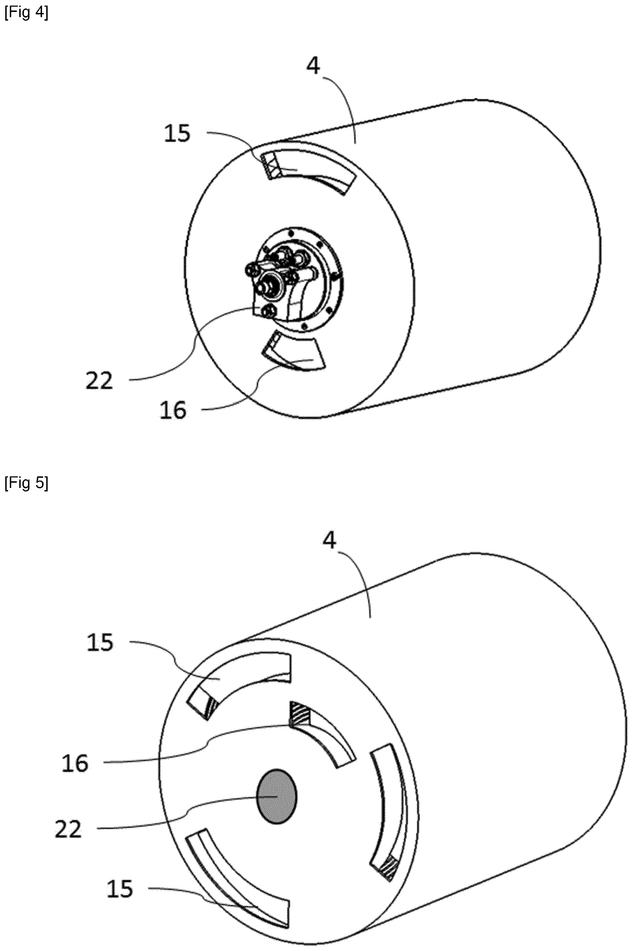

La figure 4 illustre, schématiquement et de manière non limitative, une vue tridimensionnelle d'un système de combustion selon un mode de réalisation de l'invention. La figure 4 montre le système de combustion du côté de l'injecteur 22. De ce côté, l'échangeur de chaleur 4 comporte une connexion d'entrée 16 pour les gaz d'admission ayant la forme d'une portion annulaire, et une connexion de sortie 15 pour les gaz brûlés ayant la forme d'une portion annulaire.

La figure 5 illustre, schématiquement et de manière non limitative, une vue tridimensionnelle d'un système de combustion selon une variante de réalisation de l'invention. La figure 5 montre le système de combustion du côté de l'injecteur 22. De ce côté, l'échangeur de chaleur 4 comporte une connexion d'entrée 16 pour les gaz d'admission ayant la forme d'une portion annulaire, et trois connexions de sortie 15 pour les gaz brûlés ayant la forme d'une portion annulaire.

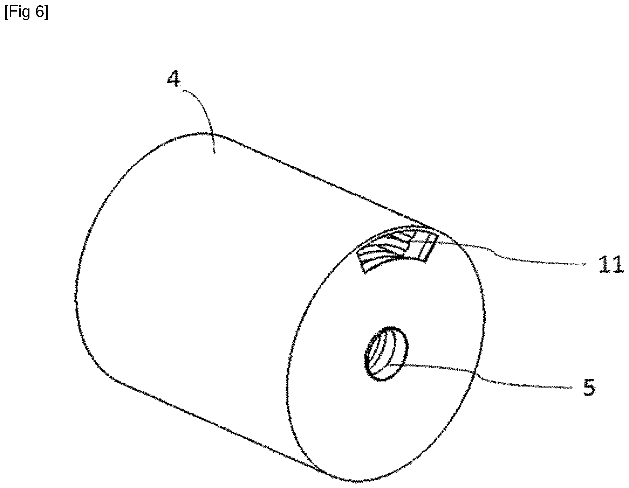

La figure 6 illustre, schématiquement et de manière non limitative, une vue tridimensionnelle d'un système de combustion selon un mode de réalisation de l'invention. La figure 5 montre le système de combustion du côté de l'échappement, le tube à flamme de la chambre de combustion 5 débouchant de ce côté. De ce côté, l'échangeur de chaleur 4 comporte une connexion d'entrée 11 pour les gaz brûlés ayant la forme d'une portion annulaire.

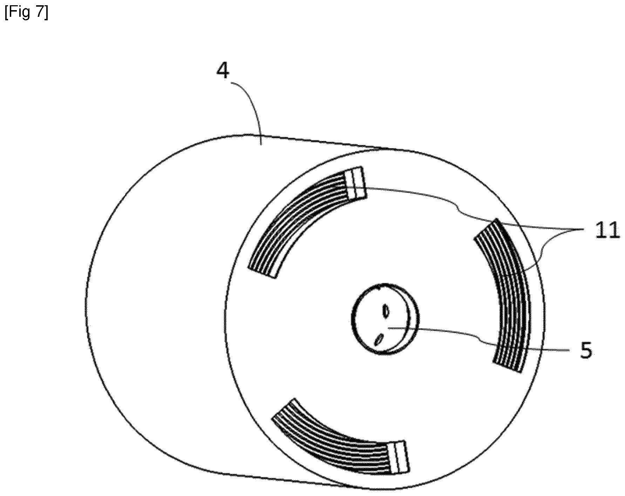

La figure 7 illustre, schématiquement et de manière non limitative, une vue tridimensionnelle d'un système de combustion selon un mode de réalisation de l'invention. La figure 6 montre le système de combustion du côté de l'échappement, le tube à flamme de la chambre de combustion 5 débouchant de ce côté. De ce côté, l'échangeur de chaleur 4 comporte trois connexions d'entrée 11 pour les gaz brûlés ayant la forme d'une portion annulaire.

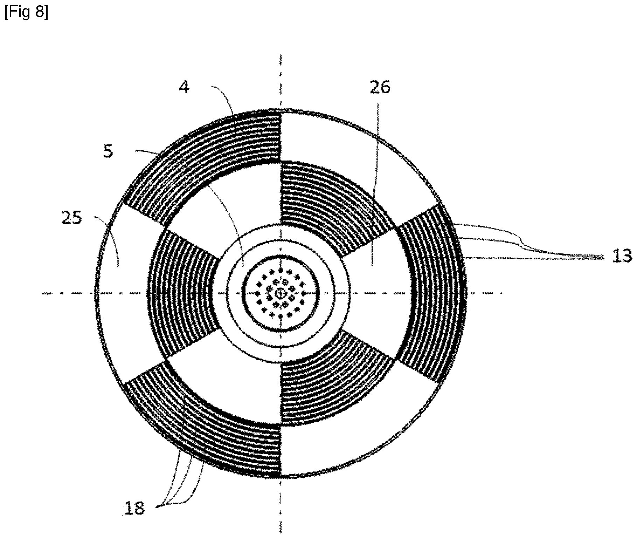

La figure 8 illustre, schématiquement et de manière non limitative, un système de combustion selon un mode de réalisation dans un plan de coupe au niveau des collecteurs. Cette figure illustre une partie des canaux 13, 18 de l'échangeur de chaleur 4, et la chambre de combustion 5. De plus, au sein des collecteurs, il est prévu des plaques 25, 26 sous forme de portions annulaires, ces plaques guident le passage des gaz dans ou depuis l'un des deux collecteurs : soit le collecteur des gaz d'admission, soit le collecteur des gaz brûlés. Les plaques 25 sont placées sur des secteurs annulaires différents des secteurs annulaires des plaques 26.

### Exemple comparatif :

Pour cet exemple, on compare :
- le volume de la microturbine de l'art antérieur d'une puissance électrique maximale d'environ 15 kW, dont la répartition volumique des principaux composants (hors capotage / isolation et conduits) est indiquée dans le tableau 1 précédemment décrit, avec
- le volume de la microturbine selon un mode de réalisation de l'invention correspondant à celui des figures 2 et 3, dont la répartition volumique des principaux composants (hors capotage / isolation et conduits) est indiquée dans le tableau 2 ci-dessous :

**[Table 1]**

| **Composant** | **Volume approximatif occupé (en L)** |
|---|---|
| Système de combustion (chambre de combustion et échangeur) | 25 L |
| Turbine / Compresseur / Machine électrique / Entrée d'air | 16 L |
| Electronique de puissance / Contrôle et refroidissement | 25 L |

Ainsi, la microturbine selon ce mode de réalisation de l'invention permet un gain de volume d'environ 74 L. Par conséquent, le système de combustion selon l'invention permet une meilleure compacité d'une telle microturbine.

## Revendications

1. Système de combustion pour une turbine, notamment pour une turbine à cycle thermodynamique avec récupérateur, pour la production d'énergie, comprenant une chambre de combustion tubulaire (5) à flux continu et un échangeur de chaleur (4) entre les gaz d'admission pour ladite chambre de combustion et les gaz brûlés issus de ladite chambre de combustion, **caractérisé en ce que** ledit échangeur de chaleur (4) est un échangeur de chaleur à contre-courant annulaire agencé autour de ladite chambre de combustion (5).

2. Système de combustion selon la revendication 1, dans lequel ledit échangeur de chaleur (4) comprend une pluralité de canaux axiaux (13, 18).

3. Système de combustion selon la revendication 2, dans lequel lesdits canaux axiaux (13, 18) sont concentriques.

4. Système de combustion selon l'une des revendications 2 ou 3, dans lequel ledit échangeur de chaleur (4) comprend un canal central pour la circulation desdits gaz brûlés.

5. Système de combustion selon l'une des revendications 2 à 4, dans lequel au moins un desdits canaux (13, 18) intègre une microstructure.

6. Système de combustion selon l'une des revendications précédentes, dans lequel ledit échangeur de chaleur (4) comporte au moins deux collecteurs annulaires (17, 19) pour lesdits gaz d'admission et deux collecteurs annulaires (12, 14) pour lesdits gaz brûlés, de préférence ledit échangeur de chaleur (4) comporte à chaque extrémité axiale un collecteur annulaire pour lesdits gaz d'admission et un collecteur annulaire pour lesdits gaz brûlés.

7. Système de combustion selon la revendication 6, dans lequel chaque collecteur annulaire pour lesdits gaz brûlés (12, 14) comporte une unique ou une pluralité de connexions d'entrée et/ou de sortie (11, 15) desdits gaz brûlés régulièrement répartis sur la circonférence dudit collecteur annulaire, de préférence chaque collecteur annulaire pour lesdits gaz brûlés (12, 14) comporte entre deux et huit connexions d'entrée et/ou de sortie (11, 15).

8. Système de combustion selon l'une des revendications 6 ou 7, dans lequel le collecteur annulaire (17) situé à la même extrémité axiale qu'un injecteur de carburant (22) de ladite chambre de combustion pour lesdits gaz d'admission comporte une unique ou une pluralité de connexions d'entrée (16) desdits gaz d'admission régulièrement répartis sur la circonférence dudit collecteur annulaire (17), de préférence entre deux et huit connexions d'entrée (16).

9. Système de combustion selon l'une des revendications 6 à 8, dans lequel le collecteur annulaire (19) pour lesdits gaz d'admission situé à l'extrémité axiale opposée d'un injecteur de carburant (22) pour ladite chambre de combustion est relié à ladite chambre de combustion (5).

10. Système de combustion selon l'une des revendications précédentes, dans lequel ledit échangeur de chaleur est réalisé en acier inoxydable ou en superalliage.

11. Système de combustion selon l'une des revendications précédentes, dans lequel ladite chambre de combustion comprend un tube à flamme avec un diffuseur perforé (21) radialement pour le passage desdits gaz d'admission, et un injecteur de carburant axial (22).

12. Turbine pour la production d'énergie comprenant au moins un étage de compression avec au moins un compresseur de gaz (3), un système de combustion selon l'une des revendications précédentes, une alimentation en carburant (8), au moins un étage de détente (6) avec au moins une turbine de détente reliée par un arbre (9) à un compresseur de gaz, dans lequel ledit échangeur de chaleur (4) dudit système de combustion assure un échange de chaleur entre lesdits gaz d'admission en sortie dudit au moins un étage de compression (3), et lesdits gaz brûlés en sortie dudit au moins un étage de détente (6).

## Patentansprüche

1. Verbrennungssystem für eine Turbine, insbesondere für eine Turbine mit thermodynamischem Kreisprozess mit Rekuperator, zur Energieerzeugung, umfassend eine Rohrbrennkammer (5) mit kontinuierlichem Strom und einen Wärmetauscher (4) zwischen den Einlassgasen für die Brennkammer und den aus der Brennkammer hervorgehenden verbrannten Gasen, **dadurch gekennzeichnet, dass** der Wärmetauscher (4) ein ringförmiger Gegenstrom-Wärmetauscher ist, der um die Brennkammer (5) herum angeordnet ist.

2. Verbrennungssystem nach Anspruch 1, wobei der Wärmetauscher (4) eine Mehrzahl von axialen Kanälen (13, 18) umfasst.

3. Verbrennungssystem nach Anspruch 2, wobei die axialen Kanäle (13, 18) konzentrisch sind.

4. Verbrennungssystem nach einem der Ansprüche 2 oder 3, wobei der Wärmetauscher (4) einen zentralen Kanal für die Zirkulation der verbrannten Gase umfasst.

5. Verbrennungssystem nach einem der Ansprüche 2 bis 4, wobei mindestens einer der Kanäle (13, 18) eine Mikrostruktur beinhaltet.

6. Verbrennungssystem nach einem der vorhergehenden Ansprüche, wobei der Wärmetauscher (4) mindestens zwei ringförmige Sammler (17, 19) für die Einlassgase und zwei ringförmige Sammler (12, 14) für die verbrannten Gase aufweist, wobei der Wärmetauscher (4) bevorzugt an jedem axialen Ende einen ringförmigen Sammler für die Einlassgase und einen ringförmigen Sammler für die verbrannten Gase aufweist.

7. Verbrennungssystem nach Anspruch 6, wobei jeder ringförmige Sammler für die verbrannten Gase (12, 14) einen einzigen oder eine Mehrzahl von Eingangs- und/oder Ausgangsanschlüssen (11, 15) für die verbrannten Gase aufweist, die regelmäßig über den Umfang des ringförmigen Sammlers verteilt sind, wobei bevorzugt jeder ringförmige Sammler für die verbrannten Gase (12, 14) zwischen zwei und acht Eingangs- und/oder Ausgangsanschlüsse (11, 15) aufweist.

8. Verbrennungssystem nach einem der Ansprüche 6 oder 7, wobei der ringförmige Sammler (17), der an demselben axialen Ende wie eine Brennstoffeinspritzdüse (22) der Brennkammer für die Einlassgase gelegen ist, einen einzigen oder eine Mehrzahl von Eingangsanschlüssen (16) für die Einlassgase, die regelmäßig über den Umfang des ringförmigen Sammlers (17) verteilt sind, bevorzugt zwischen zwei und acht Eingangsanschlüsse (16), aufweist.

9. Verbrennungssystem nach einem der Ansprüche 6 bis 8, wobei der ringförmige Sammler (19) für die Einlassgase, der an dem zu einer Brennstoffeinspritzdüse (22) für die Brennkammer entgegengesetzten axialen Ende gelegen ist, mit der Brennkammer (5) verbunden ist.

10. Verbrennungssystem nach einem der vorhergehenden Ansprüche, wobei der Wärmetauscher aus nichtrostendem Stahl oder aus einer Superlegierung ausgeführt ist.

11. Verbrennungssystem nach einem der vorhergehenden Ansprüche, wobei die Brennkammer ein Flammrohr mit einem radial gelochten Diffusor (21) für den Durchgang der Einlassgase und eine axiale Brennstoffeinspritzdüse (22) umfasst.

12. Turbine zur Energieerzeugung, umfassend mindestens eine Verdichtungsstufe mit mindestens einem Gasverdichter (3), ein Verbrennungssystem nach einem der vorhergehenden Ansprüche, eine Brennstoffversorgung (8), mindestens eine Entspannungsstufe (6) mit mindestens einer Entspannungsturbine, die durch eine Welle (9) mit einem Gasverdichter verbunden ist, wobei der Wärmetauscher (4) des Verbrennungssystems einen Wärmeaustausch zwischen den Einlassgasen im Ausgang der mindestens einen Verdichtungsstufe (3) und den verbrannten Gasen im Ausgang der mindestens einen Entspannungsstufe (6) gewährleistet.

## Claims

1. Combustion system for a turbine, notably for a turbine having a thermodynamic cycle with a recuperator, for the production of energy, comprising a continuous-flow tubular combustion chamber (5) and a heat exchanger (4) for the exchange of heat between the intake gases for said combustion chamber and the burnt gases coming from said combustion chamber, **characterized in that** said heat exchanger (4) is an annular counter-current heat exchanger arranged around said combustion chamber (5).

2. Combustion system according to Claim 1, wherein said heat exchanger (4) comprises a plurality of axial channels (13, 18).

3. Combustion system according to Claim 2, wherein said axial channels (13, 18) are concentric.

4. Combustion system according to either of Claims 2 and 3, wherein said heat exchanger (4) comprises a central channel for the circulation of said burnt gases.

5. Combustion system according to one of Claims 2 to 4, wherein at least one of said channels (13, 18) has an integrated microstructure.

6. Combustion system according to one of the preceding claims, wherein said heat exchanger (4) has at least two annular manifolds (17, 19) for said intake gases and two annular manifolds (12, 14) for said burnt gases, preferably said heat exchanger (4) has, at each axial end, an annular manifold for said intake gases and an annular manifold for said burnt gases.

7. Combustion system according to Claim 6, wherein each annular manifold for said burnt gases (12, 14) has a single inlet and/or outlet connection (11, 15) or a plurality of inlet and/or outlet connections for said burnt gases evenly distributed around the circumference of said annular manifold, preferably each annular manifold for said burnt gases (12, 14) has between two and eight inlet and/or outlet connections (11, 15).

8. Combustion system according to either of Claims 6 and 7, wherein the annular manifold (17) situated at the same axial end as a fuel injector (22) of said combustion chamber for said intake gases has a single inlet connection (16) or a plurality of inlet connections for said intake gases evenly distributed around the circumference of said annular manifold (17), preferably between two and eight inlet connections (16).

9. Combustion system according to one of Claims 6 to 8, wherein the annular manifold (19) for said intake gases that is situated at the axial end opposite a fuel injector (22) for said combustion chamber is connected to said combustion chamber (5).

10. Combustion system according to one of the preceding claims, wherein said heat exchanger is made of stainless steel or a superalloy.

11. Combustion system according to one of the preceding claims, wherein said combustion chamber comprises a flame tube with a radially perforated diffuser (21) for the passage of said intake gases, and an axial fuel injector (22).

12. Turbine for the production of energy, comprising at least one compression stage with at least one gas compressor (3), a combustion system according to one of the preceding claims, a fuel supply (8), at least one expansion stage (6) with at least one expansion turbine connected to a gas compressor by a shaft (9), wherein said heat exchanger (4) of said combustion system exchanges heat between said intake gases at the outlet of said at least one compression stage (3), and said burnt gases at the outlet of said at least one expansion stage (6).
